Europäisches Patentamt

European Patent Office

Office européen des brevets

(11) Publication number: 0 391 871
A2

# EUROPEAN PATENT APPLICATION

(21) Application number: 90850122.4

(51) Int. Cl.5: G06F 12/12, G06F 12/08

(22) Date of filing: 02.04.90

(30) Priority: 03.04.89 US 332870

(43) Date of publication of application:
10.10.90 Bulletin 90/41

(84) Designated Contracting States:
DE FR GB

(71) Applicant: **International Business Machines
Corporation**
**Old Orchard Road**
**Armonk, N.Y. 10504(US)**

(72) Inventor: **Smith, Kevin Frank**
**1323 Peach Court**
**San José, CA 95116(US)**

(74) Representative: **Johansson, Lars E. et al**
**IBM Svenska AB, SW Intellectual Property
Dept.**
**S-163 92 Stockholm(SE)**

(54) Method for managing a prioritized cache.

(57) There is disclosed a method for managing an LRU (least recently used) cache in a staged storage system storing data sets on a prioritized basis. The method uses the signed difference between an assigned and actual hit ratio to dynamically allocate cache size to a class of data and its correlation with the priority of that class. Advantageously, the hit ratio performance of a class of data cannot be degraded beyond a predetermined level by a class of data having lower priority (assigned importance).

PRIORITIZED
C A C H E

PRIORITY CLASS #3 I/Os

LRU

PRIORITY CLASS #2 I/Os

LRU

PRIORITY CLASS #1 I/Os

LRU

PRIORITY CLASS #0 I/Os

ISSUING PRIORITIZED CACHE I/Os:
EACH PRIORITY CLASS UTILIZES
ITS OWN CACHE PARTITION

Fig. 6

EP 0 391 871 A2

## METHOD FOR MANAGING A PRIORITIZED CACHE

### Field of the Invention

This invention relates to computer storage of information and, more particularly, to a method for managing an LRU (least recently used) cache in a staged storage system with reference to prioritized data sets or data by address.

### Description of Related Art

### Information Storage, Caching, and Positioning

A computer system typically includes an information processor coupling a staged storage unit. Relatedly, speed, capacity, and cost have been among the factors influencing the type of storage and its staging location relative to the processor. It is apparent that processes continually reference storage over their executing lifetimes. These references include self-referencing as well as references being made to every manner of other process, overlay, or data. It is well appreciated that information can be switched, stored, and accessed in electronic media orders of magnitude faster than that of magnetic media. Electronic storage typically relies upon charge and capacitive properties of electric fields, while magnetic storage still relies on mechanical measures such as rotational position of disks with respect to read/write heads in order to establish a path to magnetically readable or writable data. This has mandated the use of DASD for bulk storage, and electronic RAM for processor internal memory and caching.

A cache is typically placed between a processor and a larger memory source. Caches are found between a processor and main memory, and between main memory and DASD. Cache use is based upon the observation that processes frequently cluster their references to a small subset of all the data stored. If 80 percent of the references are to 5 percent of the data, then storing the 5 percent of the data in cache would significantly decrease average reference time. The problem is that the cache itself becomes a data flow choke-point as among concurrent processes. This requires a regime for the space and time allocation of cache to processes or the information they are referencing.

The prior art is replete with positioning and using cache as a buffer to perform speed matching. Illustratively, Easton et al., U.S. Patent 4,603,380, "DASD Cache Block Staging", issued July 29, 1986, describe DASD-to-cache block staging of variable-length records in minimum DASD cycle time by respectively (a) managing a linked-list representation of blocks, tracks, and staging history; and .(b) managing chained CCWs in "roll mode" with respect to DASD rotational position.

### Cache Discipline

Many cache disciplines have been proposed. The most frequent is the LRU or "least recently used". The LRU cache discipline is one in which every reference made by a process is first satisfied by an access to cache and, if the data is not available, then access is made typically to a bulk magnetic storage such as DASD. Less frequent access is made to magnetic tape. The referenced data is then copied from DASD to internal memory and cache. If the cache is full, then the least recently used data presently stored in cache is written back to DASD, if modified while resident in cache. If not modified, it can be overwritten and replaced by the new data.

The efficacy of cache breaks down where long strings of single references are made, such as to consecutive addresses defining a table. As a result, the advantage of clustering disappears. That is, the data not being in cache must be staged up from DASD. Since it is not referenced again, it is continually being replaced by newer data staged from DASD. This is termed "cache flushing".

### Dynamic Cache Allocation

Reference should be made to Mattson et al., U.S. Patent 4,463,424, "Method for Dynamically Allocating LRU/MRU Managed Memory Among Concurrent Sequential Processes", issued July 31, 1984. Mattson disclosed dynamically adjusting LRU cache partition size among concurrent processes in a CPU as a direct function of a hit ratio as approximated from sampled reference traces. Mattson sought in part to minimize the effects of flushing in addition to using hit and miss ratio dynamically to control cache allocation.

Reference should also be made to Cole et al., U.S. Patent 4,603,382, "Dynamic Buffer Reallocation", issued July 29, 1986. Cole discloses an arrangement for varying the size of a tape buffer allocated to diverse tape units as a function of hit ratio (data read misses or buffer full). Lastly, reference should be made to Dixon et al., U.S. Patent 4,489,378, "Automatic Adjustment of the Quantity of Prefetch Data in a Disk Cache Operation", issued December 18, 1984. Dixon discloses a method for varying the amount of data prefetched to cache.

## Summary of the Invention

The present invention is defined in the attached claims.

It is accordingly an object of this invention to devise a method for managing an LRU cache whose data contents are defined over a priority range from priority 1...N, and which method also maximizes the number of cache hits consistent with preserving priority. It is a related object that the method utilize a cache located in a predetermined echelon of a CPU-coupled, staged storage system and that the data in the cache be cyclically referenced.

The aforementioned objects are satisfied by a method predicated upon the unexpected observation that if the signed difference between an assigned and actual hit ratio were to be used to dynamically allocate cache size to a class of data and correlate that assignment with the priority of that class, then the actual cache hit ratio could be maximized and priority among data sets preserved. In this invention, the term "hit ratio" means the ratio of read hits to the total number of references (hits + misses).

The method implementing this observation involves initially partitioning the cache and assigning a target hit ratio arbitrarily. Next, during subsequent reference cycles, the actual hit ratio associated with each partition is periodically monitored and the size of each cache partition is altered as a function of the signed difference between the actual and target hit ratios. The alteration is such that a positive difference causes a reduction in partition size, while a negative difference causes an increase in partition size. After this, the priority class of data referenced by the host to the staged storage system is ascertained. Lastly, a reference is either made to the partition 1...N correlated with the ascertained priority class 1...N, or the reference is made to the staged storage system.

Advantageously, the hit ratio performance of a class of data cannot be degraded beyond a predetermined level (target) by a class of data having lower priority (assigned importance).

## Brief Description of the Drawing

Fig. 1 sets out a conceptual level PASCAL-like pseudo-code flow of control for a p-way set associative cache.

Fig. 2 defines global constants used in a PASCAL implementation of the method of the invention.

Fig. 3 prescribes global type definitions.

Fig. 4 sets forth global variable definitions.

Fig. 5 shows the prioritized cache driver in a PASCAL pseudo-code flow of control.

Fig. 6 illustrates CPU dispatching of prioritized cache references (I/Os).

Fig. 7 also illustrates the CPU dispatching of cache references where a change of partition sizes has occurred.

## Description of the Preferred Embodiment

The method of this invention is executable upon a computing system of the type including one or more CPUs, each CPU having a main store, input/output channel, control unit, direct access storage devices, and other I/O devices coupled thereto. Such a system is described in Amdahl et al., U.S. Patent 3,400,371,

3

"Data Processing System", issued September 3, 1968. The IBM system described therein includes as a resource all of the facilities of either the computing system or of the operating system running thereon which is required for the execution of a process. Typical resources include a main store, I/O devices, the CPU, data sets, and control or processing programs. Futhermore, said systems are capable of "multiprogramming". This pertains to the concurrent execu tion of two or more processes by a computing system, and can be managed on a computer running under the IBM System/370/XA Operating System, as described in IBM publication GC28-1154, copyright July 1973, and listed in the IBM System/370/XA Bibliography, IBM publication GC20-0001.

This invention is intended to be utilized in an operating system environment that contains a conventional data management facility, manages auxiliary storage, and provides traditional program compiler and assembly capabilities. In this regard, the method of this invention is described in a pseudo-code flow of control conforming to the PASCAL language system syntax and convention. Such syntax and conventions may be found in any standard reference work such as Jensen and Wirth, "PASCAL User's Manual and Report", 2nd Edition, copyright 1974 by Springer- Verlag. In this regard, the method steps are illustrated in both the tables and the figures in PASCAL notation and syntax.

## CPU Accessing of Attached DASD

Data sets are frequently stored on DASD volumes. A CPU's relationship with a DASD begins when a CPU invokes a START I/O instruction. This instruction serves to establish a connection between the CPU and the addressed device, and the execution of a channel program with the device. The invocation of the START I/O instruction causes control to be relinquished to a series of channel commands. This series or chain of channel commands (CCWs) is, in turn, sent over a channel to a control unit for the purpose of selecting and accessing the device, and effectuating data movement across interfaces. Each channel program consists of a sequential list of operations resident in the CPU internal or main memory. The transmission to and the execution at the control unit of the CCWs takes place only after interconnection between the CPU and the control unit takes place. For each operation (CCW) in the channel program, one or more counterpart operations are required either at the control unit or device level over an active connection. The first active connection is that of an initial selection sequence. This sequence is invoked with a START I/O operation in which an initial path is set up both electrically and logically in terms of device address (virtual/real) and device status (available/busy). The next active connection relates to that of the CCW transfer and execution. A control CCW, such as SEEK, requires physical positioning or activity at the device. A control unit, in response to receipt of the control CCW, can execute the CCW in disconnected mode.

In contrast to disconnected modes, CCWs involving the movement of data between the channel and devices, such as READ and WRITE CCWs, require the control unit to remain connected to the channel in order to effectuate the data transfer. A typical configuration, including multiple CPUs accessing shared devices over logically independent paths, is described in Luiz et al., U.S. Patent 4,207,609, "Method and Means for Path Independent Device Reservation and Reconnection in a Multi-CPU and Shared Device Access System", issued June 10, 1980.

## Prioritized Cache and the Setting of Performance Targets

Suppose that there are ten data sets (A...J) which could potentially utilize the same cache. For extrinsic reasons, it is desired to set the cache performance of data sets B, C, and H higher than that of data sets D, E, and J. Also, data sets A, F, and G have the least priority or significance. Lastly, data set I need not even be cached. This can be depicted as:

Highest Priority 3: B, C, H
Next Priority 2: D, E, J
Lowest Priority 1: A, F, G
Not in Cache 0: I

Having established the relative priorities, it now becomes necessary to determine the read hit ratios which each group is to achieve. Even though priority group #3 is the highest priority in this example, its target hit ratio does not have to be the highest of all of the groups. Note that priority #0 is special in that data in that priority group is never allowed to utilize the cache (i.e., bypass cache); thus, there is no reason to establish a target hit ratio for priority #0.

In this illustration, arbitrary read hit ratio targets have been set for each of the priority groups as follows:

(1) References to data in priority class #0 will not utilize the cache resource.

(2) If the references to data in priority class #1 are able to utilize the cache resource, then priority class #2 will have an average read hit ratio greater than or equal to 87 percent.

(3) If the references to data in priority class #2 are able to utilize the cache resource, then priority class #3 will have an average read hit ratio greater than or equal to 80 percent.

Assuming that there are sufficient cache resources to meet the highest priority's target, then the remaining cache resources are used to meet the hit ratio target for the next highest priority class. Any resources still available will then be used toward benefitting the next lower priority class, etc. The process iterates in this manner until priority class #1 is meeting its target. Any cache resources which still remain can then be distributed in any way among the various priority classes.

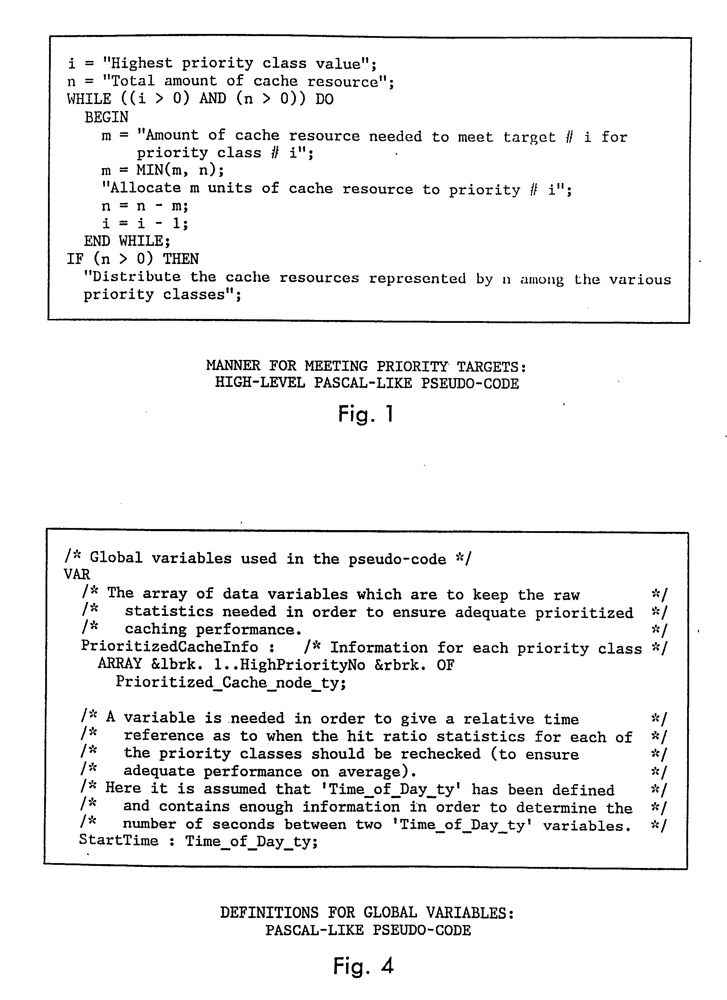

Reference should now be made to Fig. 1, which distributes cache among the partitions according to their priority order as a function of a WHILE.. DO loop. It should be appreciated that the prioritized cache is really a p-way set associative cache (where p is the number of cached priority classes). The value of partitioning the cache for each priority class is that each priority class is thus able to enjoy the full benefits of an LRU caching scheme and yet do so with no danger of affecting the cache performance of a higher priority class.

## Aspects of the Implementation

To fully appreciate the method of this invention, a pseudo-code model in PASCAL language notation is set forth in the figures and tables suitable for use with a single cache control unit or resource manager. The presentation observes the following order in PASCAL syntax:

|  | Syntactical Element | Figure or Table |
|---|---|---|
| (1) | Constants | Fig. 2 |
| (2) | Types (description of variable structures) | Fig. 3 |
| (3) | Global Variables | Fig. 4 |
| (4) | Initialization of variables including cache memory | Table 1 |
| (5) | Procedures manifesting aspects of the method steps: |  |
| (a) | reassignment of cache from one partition to another | Table 2 |
| (b) | tuning the prioritized cache partition sizes | Table 3 |
| (c) | issuing a cache I/O | Table 4 |
| (6) | Main cache control procedure | Fig. 5 |

## Definition and Initialization of Global Constants, Types, and Variables

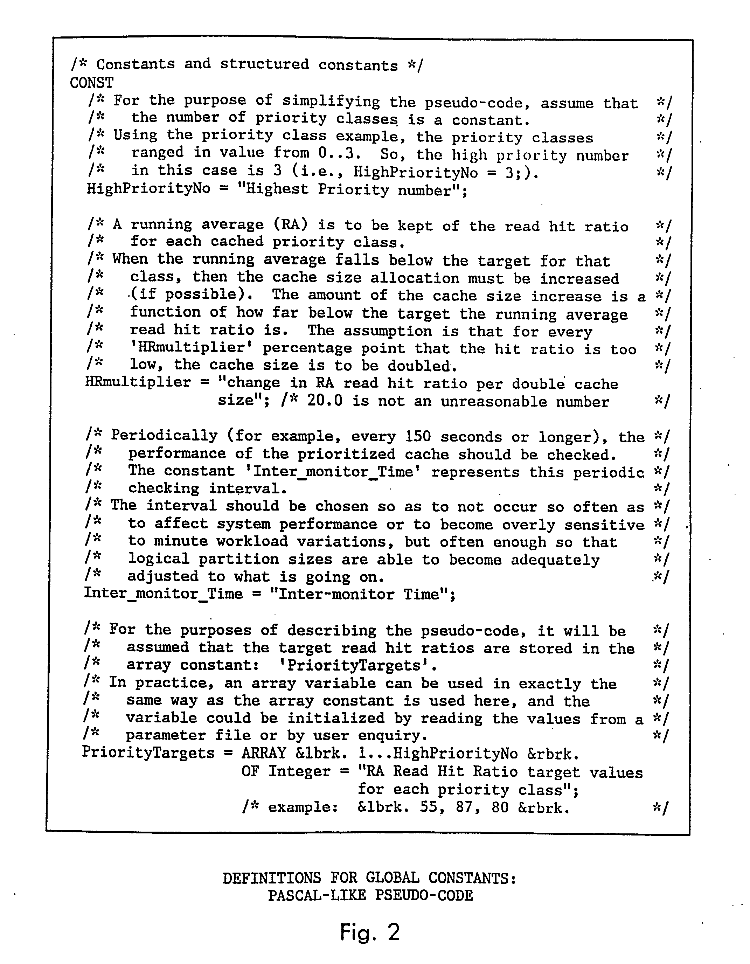

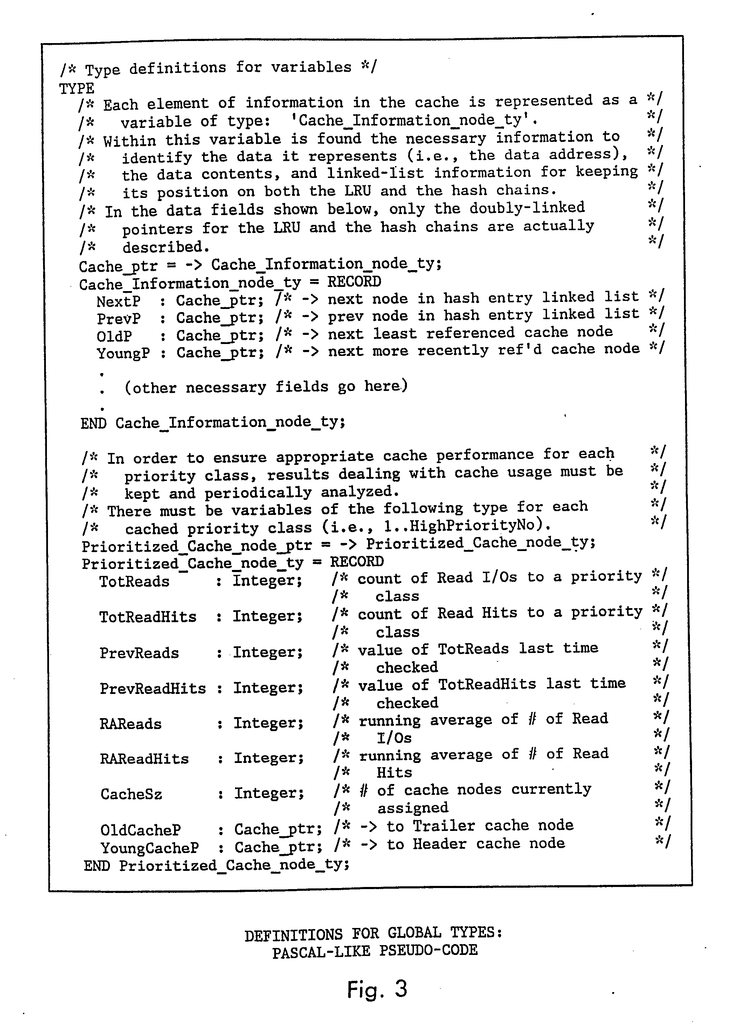

Referring now to Figs. 2-4, there is set out a counter-part list of global constants, types, and variables. Associated with each constant, type, or variable is a comment field defining the element and the method of its value selection or structure.

The present implementation requires that the variables and cache memory be initialized according to the procedure set out in Table 1. Once the global variables have been created and initialized, the prioritized cache can begin to ensure prioritized cache performance.

Referring to Table 1, the cache nodes are allocated as well as initialized. In the case where the cache nodes already exist, rather than allocating memory for each of the nodes, one would transfer them from the existing cache memory instead.

## Procedures Manifesting Aspects of the Method Steps

Referring now to Tables 2, 3, and 4, there is set forth a pseudo-code listing for internal cache processing covering cache transfer, tuning in a prioritized cache, and issuing a cache I/O request. The

5

pseudo-code for the procedure denominated "Cache_xfer" is set forth. However, the actual transfer of the cache memory would almost certainly be done in the microcode logic of the control unit itself. The "Prioritized-_Caching_Tuning" decides how much cache memory to transfer from one cache partition to another. Finally, the last routine, "Issue_Prioritized_ Cache_IO" displays the logic sequence which would take place with each I/O to be issued.

Cache Transfer

Referring again to Table 2, the procedure shown should reside within the control unit. In such a case, each call to this procedure should be thought of as some information which is relayed to the control unit to reallocate logical cache partition sizes. The actual information to be relayed to the control unit could be transmitted as part of a CCW, for example. The parameters used are necessary information elements to be used by the cache control unit or resource manager; namely, identifiers to designate the two logical partitions to exchange cache memory, and the amount of cache memory to be transferred. As a result of running this procedure, "n" cache cells will have been transferred from the cache partition represented by "src" to the one represented by "dest".

Adjustment of Cache Space as Among the Prioritized Data Sets

Referring again to Table 3, there is set forth the reiterative adjustment called for by the method of this invention. The steps required include:

(1) Determine whether each priority class is meeting, exceeding, or failing to meet its objectives (using a weighted running average).

(2) Based upon the difference between the target objective and running average, predict what signed change in the cache size will yield a read hit ratio closer to the target.

(3) Sum the signed changes for all of the priority classes, and if the result is less than or equal to zero, then there is at least as much cache as is needed (go to step 4). Otherwise, there is more cache needed than is available (go to step 5).

(4) If there is at least as much cache as is needed, then distribute all of the excess cache memory in proportion to the number of cached read I/Os to each of the prioritized classes.

(5) If more cache is needed than is available, then make sure that the highest priority classes have their needs met, even if it means robbing cache from the lowest classes.

(6) Finally, transfer the recommended amounts of cache memory from/to each of the priority classes.

In this procedure, "Nreads" is a variable for keeping track of the running average number of cached read I/Os for each of the priority classes. Note that this is comparable to using the cached read I/O rates since all priority classes begin at the same time. The variable "Residue" keeps a running sum of the recommended signed changes in the cache memory sizes of each of the priority classes. If the final result of "Residue" is less than zero, then there is more demand for cache memory than supply (by the amount: -Residue). If the final result of "Residue" is greater than or equal to zero, then there is more supply of cache memory than demand (by the amount: Residue). Note, "Residue" is the negative of the sum of the signed changes in the cache sizes for each of the priority classes.

For each of the priority classes in this procedure, a comparison is performed between the running average results and those of the target. Based on the difference, the signed change in the cache size is computed. Also, a running sum of each of the variables "Nreads" and "Residue" are kept, respectively.

Issuance of Cache I/O

Referring again to Table 4, the procedure supports the proposition that for every I/O of a given cache priority class to be issued to the control unit, "PriorityNo" representing the cache priority class number, should be executed.

Main Prioritized Cache Driver

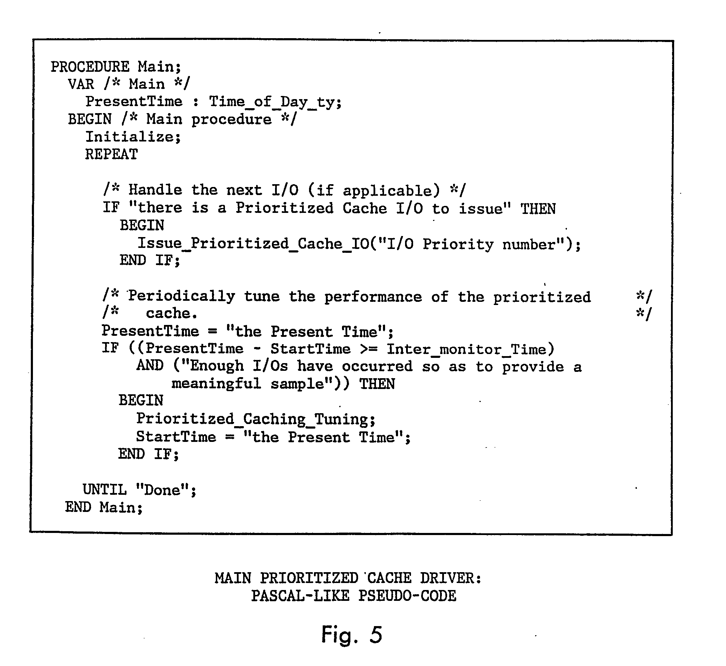

Referring now to Fig. 5, the main procedure comprising a pair of IF-THEN-ELSE routines is built within a REPEAT..UNTIL loop. The major structures support assigning priorities and targets to data sets, and then tuning performance after a periord of referencing experience.

Illustrative Example

Prioritized Cache I/Os

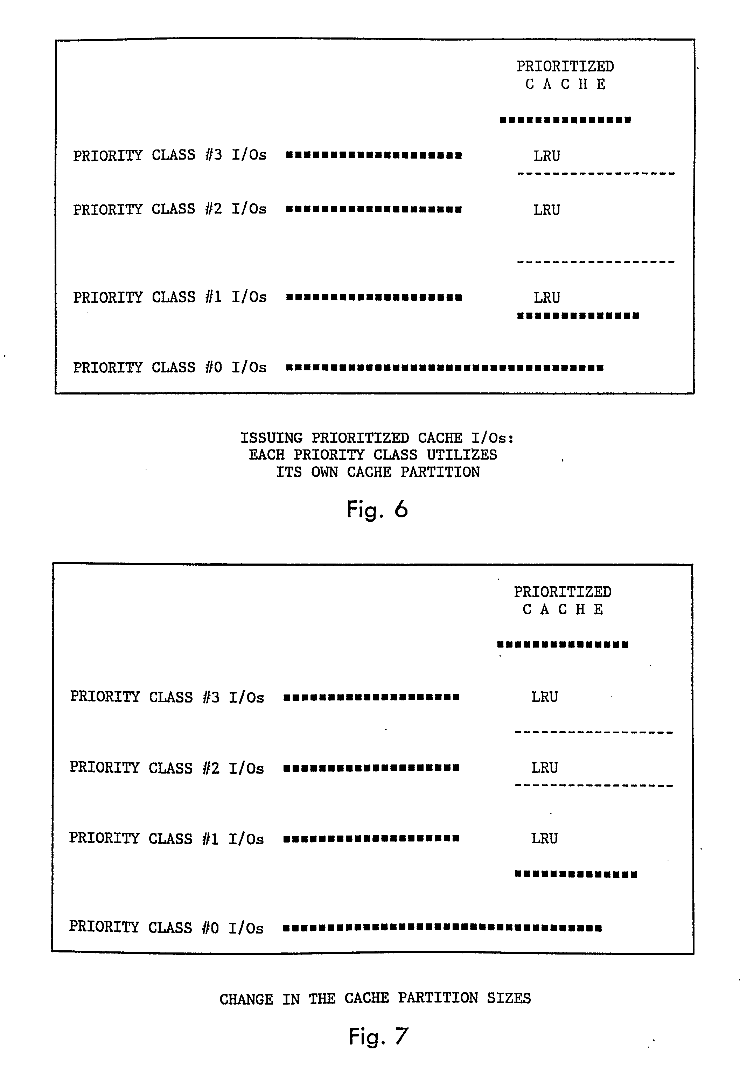

Referring now to Fig. 6, there is shown a single physical cache in which each cached priority class makes use of its own LRU cache partition. For instance, a priority class #2 I/O request will take advantage of the middle cache partition (in the figure). A priority class #0 I/O request will go straight to the storage medium, not taking advantage of any cache partition, and so on.

As previously explained, the performance of each of the cache partitions periodically must be examined to ensure that the prioritized cache read hit ratio targets are being met. As a result of each performance examination, the cache partition sizes may be altered. This is shown with respect to Fig. 7.

Cache Partition Size Tuning

The tabular illustration shown below is a reasonable approximation to those values found in practice. The tabular illustration assumes respective cache sizes for each of the priority classes. The running averages for the read hit ratio and the I/O rate were measured and available at the time that the "Prioritized_Caching_Tuning" routine is to be invoked, and the automatic adjustments can be computed.

| Priority | Target | Cache Size | Read Hit Ratio | Cached I/O Rate |
|---|---|---|---|---|
| 3 | 80% | 40 | 70% | 11 |
| 2 | 87% | 100 | 97% | 30 |
| 1 | 55% | 60 | 35% | 19 |
| 0 | - | 0 | - | 15 |

It is believed instructive at this point to summarize the steps according to the method of this invention peculiar to this phase. These include:

(1) Determine how each priority class is doing as compared to its target.
(2) Predict the signed change in the cache size that should correct the situation.
(3) Add the recommended changes to the cache size (for all of the priority classes).
(4) If (sum <= 0), then distribute the extra cache according to the I/O rates.
(5) If (sum > 0), then take cache from the lowest priorities as needed.
(6) Transfer the cache memory according to the computed recommendations.

Correlating the Steps with the Tabular Illustration

Step #1. Determine how each priority class is doing as compared to its target:
Priority Class #3: Hit ratio too low by 10%
Priority Class #2: Hit ratio too high by 10%
Priority Class #1: Hit ratio too low by 20%
Priority Class #0: Not to be examined
Step #2. Predict the signed change in the cache size that should correct the situation (this step is based upon the assumption that the running average hit ratio will change by 20 percentage points every time the cache size is either halved or doubled):
Priority Class #3: Needs 17 more units of cache
Priority Class #2: Is to lose 29 units of cache
Priority Class #1: Needs 60 more units of cache
Priority Class #0: Not applicable

EP 0 391 871 A2

Step #3. Adding the recommended changes to the cache sizes for all of the priority classes yields:

$17 + \overline{-29} + \overline{60} = +48$

Step #4. If (sum <= 0), then distribute the extra cache according to the I/O rates. Note, step #4 is not applicable.

Step #5. If (sum > 0), then take cache from the lowest priorities as needed.

The cache memory shortage is "+48" cache units. The objective for step 5 can be met by merely reducing the cache memory increase, which goes to priority class #1, by 48 cache units. The adjusted cache memory changes for each of the priority classes now becomes:

Priority Class #3: Is to increase by 17 more units of cache

Priority Class #2: Is to decrease by 29 units of cache

Priority Class #1: Is to increase by 12 more units of cache

Priority Class #0: Not applicable

Step #6. Transfer the cache memory according to the computed recommendations.

Following the execution of this step, the cache sizes as shown in the tabular illustration would change as follows:

| Priority | Target | New Cache Size |
|---|---|---|
| 3 | 80% | 57 |
| 2 | 87% | 71 |
| 1 | 55% | 72 |

Aspects of an Alternative Implementation Model of the Method of this Invention

The method of this invention has been described with reference to a procedural model of control. That is, the CPU and storage resource management expressing the method steps have been in the form of a PASCAL-based pseudo-code flow of control and data pathing. The method steps can also be implemented with reference to a pattern-sensitive, rule-based, inferencing model without undue experimentation. That is, the method steps of:

(a) assigning data set prioritization, hit ratios, and cache size;

(b) relative magnitude comparing the actual and target ratios; and

(c) readjusting cache space on an LRU basis as a function of the sign of the comparison can be encoded as an unordered finite sequence of rules in which each rule in such a system represents an ordered pair of a condition (state set) and action statements.

Rule-based systems are cyclic and inference in either a forward- or backward-chaining manner. The implementation of interest is data or pattern driven in a forward-chaining manner. During a cycle, forward-chained systems use data or data changes to select out the rules having pattern parts matching the data (form a conflict set) and then select and execute one of the rules according to a predetermined criterion (recency). Execution of a rule means that action specified is taken whether it involves subroutine execution or invoking another rule. Typically, the system data state is altered in some manner after which the cycle repeats.

As applied above, the control data includes the data set names, priorities, target and actual hit ratios, etc., in addition to rules whose action parts can modify the control data and perform the other called-for steps. The cycle of processing includes (a) identifying that subset of rules having a condition or pattern part matching the data; (b) selecting at least one rule from the identified subset of rules according to an extrinsic protocol; and (c) executing (firing) the action prescribed by the action part of the selected rule, including modification to the data base.

Reference should be made to Brownston et al., "Proramming Expert Systems in OPS5", copyright 1985 by Addison-Wesley Publishing Co., for a description of a model forward-chained inferencing system. Also, reference can be made to "KnowledgeTool User's Guide and Reference", IBM publication SH20-9251. KnowledgeToolTM is a version of the procedural language PL/I extended to include forward-chained inferencing system constructs.

8

TABLE 1

```
/* Initialization consists of: */
PROCEDURE Initialize;

VAR /* Initialize */
   p      : Integer;
   a      : Integer;
  CacheP : Cache_ptr;

BEGIN /* Initialize */
  FOR p = 1 TO HighPriorityNo DO
    BEGIN
      WITH PrioritizedCacheInfo&lbrk. p &rbrk. DO
        BEGIN
          TotReads      = 0;
          TotReadHits   = 0;
          PrevReads     = 0;
          PrevReadHits = 0;
          RAReads ,     = 0;
          RAReadHits    = 0;
          Allocate_Memory_For(OldCacheP);
          WITH OldCacheP-> DO
            BEGIN
              YoungP = YoungCacheP;
              OldP   = YoungCacheP;
              NextP  = NIL;
              PrevP  = NIL;
            END WITH;
          Allocate_Memory_For(YoungCacheP);
          WITH YoungCacheP-> DO
            BEGIN
              YoungP = YoungCacheP;
              OldP   = OldCacheP;
              NextP  = NIL;
              PrevP  = NIL;
            END WITH;
          /* Each cached class starts out with same amount of cache */
          CacheSz = "Total Control Unit Cache" DIV HighPriorityNo;
        END WITH;
    END FOR;

  /* Assign remaining cache to the highest priority class */
  WITH PrioritizedCacheInfo&lbrk. HighPriorityNo &rbrk. DO
    CacheSz = CacheSz + "Total Control Unit Cache" MOD HighPriorityNo;
    /* Initialize the Cache Memory.                                    */
    /* (Cache nodes are implemented as a doubly-linked list in LRU     */
    /*   order.)                                                       */
    FOR p = 1 TO HighPriorityNo DO
      BEGIN
        WITH PrioritizedCacheInfo&lbrk. p &rbrk. DO
          BEGIN
            FOR a = 1 TO CacheSz DO
```

```
            BEGIN
              Allocate_Memory_For(CacheP);
              WITH CacheP-> DO
                BEGIN
                  NextP                = NIL;
                  PrevP                = NIL;
                  YoungP               = YoungCacheP;
                  OldP                 = YoungCacheP->OldP;
                  YoungCacheP->OldP = CacheP;
                  OldP->YoungP         = CacheP;
                  "Mark the cache node as Invalid";
                END WITH;
              END FOR;
          END WITH;
      END FOR;

    StartTime = "the Present Time";

  END Initialize;
```

TABLE 2

```
PROCEDURE Cache_xfer(src, dest, n : Integer);

    /* Temporary variables used within this routine: */
    VAR /* Cache_xfer */
        a       : Integer;
        CacheP : Cache_ptr; /* Cache element pointer */
        LastP  : Cache_ptr;
        srcP,
        destP  : Prioritized_Cache_node_ptr;

    BEGIN /* Cache_xfer */
        srcP  = Addr(PrioritizedCacheInfo&lbrk. src &rbrk.);
        destP = Addr(PrioritizedCacheInfo&lbrk. dest &rbrk.);

        Assert(srcP->CacheSz >= n);
        Assert(n > 0); /* no need to be able to handle negative amounts    */

        /* Transfer from the cache partition which is to give up its      */
        /*    cache memory and begin with the OLDEST cache node.          */
        CacheP = srcP->OldCacheP->YoungP;

        /* Transfer the 'n' oldest cache nodes */
        LastP = CacheP;
        FOR a = n-2 DOWNTO 0 DO
          BEGIN

            /* remove from hash chain if being used */
            IF (CacheP->PrevP <> NIL) THEN
              BEGIN
                CacheP->PrevP->NextP = CacheP->NextP;
                IF (CacheP->NextP <> NIL) THEN
                  BEGIN
                    CacheP->NextP->PrevP = CacheP->PrevP;
                    CacheP->NextP        = NIL;
                  END IF;
                CacheP->PrevP = NIL;
              END IF;

            "Mark the Cache node pointed to by 'CacheP' invalidated";
            CacheP = CacheP->YoungP;
          END FOR;

        LastP->OldP->YoungP  = CacheP->YoungP;      /* Take off OLD queue */
        CacheP->YoungP->OldP = LastP->OldP;         /* by linking around. */
        srcP->CacheSz        = srcP->CacheSz - n;   /* It is now removed. */
        destP->CacheSz       = destP->CacheSz + n;  /* Put it onto Dest.  */
        CacheP->YoungP       = destP->OldCacheP->YoungP;
        CacheP->YoungP->OldP = CacheP;
        LastP->OldP          = destP->OldCacheP;
        LastP->OldP->YoungP  = LastP;
    END Cache_xfer;
```

TABLE 3

```
PROCEDURE Prioritized_Caching_Tuning;
   VAR /* Prioritized_Caching_Tuning */
      /* Temporary variables used within this routine: */
      a, p    : Integer;
      i       : Integer;
      Nreads  : Integer;
      Residue : Integer;
      SzChg   : ARRAY &lbrk. 1..HighPriorityNo &rbrk. OF Integer;
      delt    : Real;
      n       : Real;

   BEGIN /* Prioritized_Caching_Tuning */
      Nreads  = 0;
      Residue = 0;
      FOR p   = HighPriorityNo DOWNTO 1 DO
         WITH PrioritizedCacheInfo&lbrk. p &rbrk. DO
            BEGIN

               /* Update the running average based on most recent results */
               IF (RAReads = 0) THEN
                  BEGIN /* first time, store the most recent results */
                     RAReads     = TotReads;
                     RAReadHits = TotReadHits;
                  END IF
               ELSE
                  BEGIN /* subsequent times, apply a 50% weighting */
                     RAReads     = (RAReads + (TotReads-PrevReads)) DIV 2;
                     RAReadHits = (RAReadHits + (TotReadHits-PrevReadHits))
                                     DIV 2;
                  END ELSE;
               PrevReads     = TotReads;
               PrevReadHits = TotReadHits;

               /* Compute the signed difference between target and actual  */
               IF (RAReads = 0) THEN        /* detect, if no I/O activity   */
                  delt = HRmultiplier       /* apply default if no activity */
               ELSE
                  delt = (RAReadHits/RAReads) * 100.0 - PriorityTargets&lbrk.
                                                 p &rbrk.;

               /* Compute the signed change in the cache size.            */
               /* The cache size change is based on the assumption that   */
               /*   the running average will change by 'HRmultiplier'     */
               /*   percentage points each time that the cache size is    */
               /*   halved or doubled.                                    */
               n = delt / HRmultiplier;
               /* this is just to keep changes within a reasonable range  */
               IF ((-0.2 < n) AND (n < 0.2)) THEN
                  n = 0.0
               ELSE IF (n < -2.0) THEN
```

TABLE 3 (cont.)

```
      n = -2.0
    ELSE IF (2.0 < n) THEN
      n = 2.0;

    /* determine desired growth/shrink amount */
    IF ((CacheSz <= 1) AND (RAReads > 0)) THEN
      i = 2 * Ceiling(-n)
    ELSE
      i = Round((2**(-n) - 1) * CacheSz);
    IF (-i >= CacheSz) THEN
      i = -CacheSz
    ELSE IF (i + CacheSz > "Total CU CacheSz") THEN
      i = "Total CU CacheSz";
    SzChg&lbrk. p &rbrk. = i; /* store signed cache size change */

    /* Update:  'Nreads' and 'Residue' */
    NReads  = NReads + RAReads;
    Residue = Residue - i;

  END; /* with, for */

/* The variable 'Residue' represents whether the combined cache */
/*    needs represent a surplus or deficit.                     */
IF (Residue > 0) THEN
  /* Handle the condition when there is more cache memory than  */
  /*    is needed by all of the priority classes.               */
  /* Distribute the residue based on cache activity rates.      */
  /*    ('Nreads' represents the total activity rate.)          */
  BEGIN
    n      = Residue / NReads;
    FOR p = HighPriorityNo-1 DOWNTO 1 DO
      BEGIN
        SzChg&lbrk. p &rbrk. = SzChg&lbrk. p &rbrk.
          + Round(n * PrioritizedCacheInfo&lbrk. p
            &rbrk..RAReads);
        Residue = Residue
          - Round(n * PrioritizedCacheInfo&lbrk. p
            &rbrk..RAReads);
      END FOR;
    SzChg&lbrk. HighPriorityNo &rbrk. =
      SzChg&lbrk. HighPriorityNo &rbrk. + Residue;
    Residue = 0;
  END IF
ELSE IF (Residue < 0) THEN
  /* Handle the condition when there is less cache memory than  */
  /*    is needed by all of the priority classes.               */
  /* Steal needed cache memory from the lowest priority classes */
  /*    first.                                                   */
  BEGIN
    p = 1;
    WHILE ((p < HighPriorityNo) AND (Residue < 0)) DO
      BEGIN
```

```
                    TABLE 3 (cont.)
          WITH PrioritizedCacheInfo&lbrk. p &rbrk. DO
            IF (CacheSz + SzChg&lbrk. p &rbrk. < -Residue) THEN
              BEGIN
                Residue = Residue + CacheSz + SzChg&lbrk. p &rbrk.;
                SzChg&lbrk. p &rbrk. = -CacheSz;
              END IF
            ELSE
              BEGIN
                SzChg&lbrk. p &rbrk. = SzChg&lbrk. p &rbrk.
                                          + Residue;
                Residue = 0;
              END ELSE;
            p = p + 1;
          END; /* while */
        /* Handle case when highest priority is trying to add too    */
        /*    much                                                    */
        SzChg&lbrk. HighPriorityNo &rbrk. = SzChg&lbrk. HighPriorityNo
                                          &rbrk. + Residue;
        Residue = 0;
      END ELSE; ,

    /* Finally, transfer the recommended amounts of cache memory     */
    /*    from/to each of the priority classes.                      */
    FOR a = HighPriorityNo DOWNTO 1 DO
      BEGIN
        p = 1;
        WHILE ((p <= HighPriorityNo) AND
              (SzChg&lbrk. a &rbrk. > 0)) DO
          BEGIN
            IF (SzChg&lbrk. p &rbrk. < 0) THEN
              BEGIN /* partition 'p' is to shrink, give to 'a' */
                IF (SzChg&lbrk. p &rbrk. + SzChg&lbrk. a &rbrk. > 0)
                    THEN
                  BEGIN
                    Cache_xfer(p, a, -SzChg&lbrk. p &rbrk.);
                    SzChg&lbrk. a &rbrk = SzChg&lbrk. a &rbrk.
                                          + SzChg&lbrk. p &rbrk.;
                    SzChg&lbrk. p &rbrk. = 0;
                  END IF
                ELSE
                  BEGIN
                    Cache_xfer(p, a, SzChg&lbrk. a &rbrk.);
                    SzChg&lbrk. p &rbrk. = SzChg&lbrk. p &rbrk.
                                          + SzChg&lbrk. a &rbrk.;
                    SzChg&lbrk. a &rbrk. = 0;
                  END ELSE;
              END IF;
            p = p + 1;
          END WHILE;
      END FOR;
    END Prioritized_Caching_Tuning;
```

## TABLE 4

```
PROCEDURE Issue_Prioritized_Cache_IO(PriorityNo : Integer);
  BEGIN /* Issue_Prioritized_Cache_IO procedure */

      /* Priority _0 does not utilize the cache resource at all */
      IF (PriorityNo > 0) THEN
          BEGIN /* I/O belongs to a cached priority class */

              IF ("I/O is a Read") THEN
                  WITH PrioritizedCacheInfo&lbrk. PriorityNo &rbrk. DO
                      TotReads = TotReads + 1;

              "Send I/O to Control Unit designated logical cache partition
              number:  'PriorityNo' in the CCW"

              IF (("I/O was a Read") AND ("I/O was found in the cache")) THEN
                  WITH PrioritizedCacheInfo&lbrk. PriorityNo &rbrk. DO
                      TotReadHits = TotReadHits + 1;

          END IF
          ELSE /* I/O is not a cached priority class, skip use of the cache */
              "Send I/O to Control Unit with the BYPASS CACHE option selected";

      END Issue_Prioritized_Cache_IO;
```

**Claims**

1. A method for managing an LRU cache whose data contents are defined over a priority range 1...N, said cache being located in a predetermined echelon of a CPU-coupled, staged storage system, data in said cache being referenced with read and write operations in a cycle, comprising the the steps of:
   (a) assigning prioritization, target hit ratio, and cache size to each of N cache partitions;
   (b) measuring the actual hit ratios for each partition;
   (c) relative magnitude comparing the actual and target ratios for each partition; and
   (d) readjusting cache space on an LRU basis as a function of the sign of the relative magnitude comparison.

2. The method according to claim 1, wherein said measuring step for the actual hit ratio utilizes a weighted running average.

3. The method according to claim 1, wherein if the sum of the signed relative magnitude comparison is less than zero, distributing cache size in proportion to the number of cache read operations per partition; and further wherein if the sum is greater than zero, distributing cache size to bias in favor of the higher priority partitions.

4. A method for managing an LRU cache whose data contents are defined over a priority range from priority 1...N, said cache being located in a predetermined echelon of a host-coupled, staged storage system, data in said cache being referenced by read and write operations in a cycle, comprising the steps of:
   (a) initially partitioning the cache and assigning a target hit ratio arbitrarily to each partition;
   (b) during subsequent reference cycles, periodically monitoring the actual hit ratio associated with each partition and altering the size of each partition of said cache as a function of the signed difference between the actual and target hit ratios such that a positive difference causes a reduction in partition size, while a negative difference causes an increase in partition size;
   (c) ascertaining the priority class of data referenced by the host to the staged storage system; and
   (d) causing a reference to be made to the partition 1...N correlated with the ascertained priority class 1...N, otherwise causing a reference to be made to the staged storage system.

5. The method according to claim 4, wherein said cache is an n-way set associative cache, N being the number of cached priority classes.

6. The method according to claim 4, wherein estimated increases or reductions in cache size are a function of powers of two.

7. The method according to claim 4, wherein if the sum of the signed monitored differences between the actual and target hit ratios is less than zero, distributing cache size in proportion to the number of cache read operations per partition; and further wherein if the sum is grater than zero, distributing cache size to bias in favor of the higher priority partitions.

8. The method according to claim 4, wherein said method uses a cyclic, rule-based, control data sensitive inferencing system, said control data including cache parametric values of partition size, priority, target and actual hit ratios,

said system including means for storing control data and rules, and means cooperating with the storage means for executing a control cycle, each rule having pattern indication and action specifying parts thereof, comprising the cyclic steps of:

(a) identifying an executable subset of rules by matching the pattern parts of the rules to those elements of control data in the storage means modified or created during a preceding cycle;

(b) selecting a rule from the identified rules; and

(c) executing the action prescribed by the selected rule.

```
i = "Highest priority class value";
n = "Total amount of cache resource";
WHILE ((i > 0) AND (n > 0)) DO
   BEGIN
     m = "Amount of cache resource needed to meet target # i for
         priority class # i";
     m = MIN(m, n);
     "Allocate m units of cache resource to priority # i";
     n = n - m;
     i = i - 1;
   END WHILE;
IF (n > 0) THEN
   "Distribute the cache resources represented by n among the various
   priority classes";
```

MANNER FOR MEETING PRIORITY TARGETS:
HIGH-LEVEL PASCAL-LIKE PSEUDO-CODE

## Fig. 1

```
/* Global variables used in the pseudo-code */
VAR
   /* The array of data variables which are to keep the raw        */
   /*    statistics needed in order to ensure adequate prioritized  */
   /*    caching performance.                                       */
   PrioritizedCacheInfo :    /* Information for each priority class */
     ARRAY &lbrk. 1..HighPriorityNo &rbrk. OF
        Prioritized_Cache_node_ty;

   /* A variable is needed in order to give a relative time         */
   /*    reference as to when the hit ratio statistics for each of  */
   /*    the priority classes should be rechecked (to ensure        */
   /*    adequate performance on average).                          */
   /* Here it is assumed that 'Time_of_Day_ty' has been defined     */
   /*    and contains enough information in order to determine the  */
   /*    number of seconds between two 'Time_of_Day_ty' variables.  */
   StartTime : Time_of_Day_ty;
```

DEFINITIONS FOR GLOBAL VARIABLES:
PASCAL-LIKE PSEUDO-CODE

## Fig. 4

```
/* Constants and structured constants */
CONST
  /* For the purpose of simplifying the pseudo-code, assume that  */
  /*   the number of priority classes is a constant.              */
  /* Using the priority class example, the priority classes       */
  /*   ranged in value from 0..3.  So, the high priority number   */
  /*   in this case is 3 (i.e., HighPriorityNo = 3;).             */
  HighPriorityNo = "Highest Priority number";

  /* A running average (RA) is to be kept of the read hit ratio   */
  /*   for each cached priority class.                            */
  /* When the running average falls below the target for that     */
  /*   class, then the cache size allocation must be increased    */
  /*   (if possible).  The amount of the cache size increase is a */
  /*   function of how far below the target the running average   */
  /*   read hit ratio is.  The assumption is that for every       */
  /*   'HRmultiplier' percentage point that the hit ratio is too  */
  /*   low, the cache size is to be doubled.                      */
  HRmultiplier = "change in RA read hit ratio per double cache
                  size"; /* 20.0 is not an unreasonable number    */

  /* Periodically (for example, every 150 seconds or longer), the */
  /*   performance of the prioritized cache should be checked.    */
  /*   The constant 'Inter_monitor_Time' represents this periodic */
  /*   checking interval.                                         */
  /* The interval should be chosen so as to not occur so often as */
  /*   to affect system performance or to become overly sensitive */
  /*   to minute workload variations, but often enough so that    */
  /*   logical partition sizes are able to become adequately      */
  /*   adjusted to what is going on.                              */
  Inter_monitor_Time = "Inter-monitor Time";

  /* For the purposes of describing the pseudo-code, it will be   */
  /*   assumed that the target read hit ratios are stored in the  */
  /*   array constant:  'PriorityTargets'.                        */
  /* In practice, an array variable can be used in exactly the    */
  /*   same way as the array constant is used here, and the       */
  /*   variable could be initialized by reading the values from a */
  /*   parameter file or by user enquiry.                         */
  PriorityTargets = ARRAY &lbrk. 1...HighPriorityNo &rbrk.
                    OF Integer = "RA Read Hit Ratio target values
                                  for each priority class";
                    /* example:  &lbrk. 55, 87, 80 &rbrk.         */
```

DEFINITIONS FOR GLOBAL CONSTANTS:
PASCAL-LIKE PSEUDO-CODE

Fig. 2

```
/* Type definitions for variables */
TYPE
  /* Each element of information in the cache is represented as a */
  /*   variable of type:  'Cache_Information_node_ty'.            */
  /* Within this variable is found the necessary information to   */
  /*   identify the data it represents (i.e., the data address),  */
  /*   the data contents, and linked-list information for keeping */
  /*   its position on both the LRU and the hash chains.          */
  /* In the data fields shown below, only the doubly-linked       */
  /*   pointers for the LRU and the hash chains are actually      */
  /*   described.                                                 */
  Cache_ptr = -> Cache_Information_node_ty;
  Cache_Information_node_ty = RECORD
    NextP  : Cache_ptr; /* -> next node in hash entry linked list */
    PrevP  : Cache_ptr; /* -> prev node in hash entry linked list */
    OldP   : Cache_ptr; /* -> next least referenced cache node    */
    YoungP : Cache_ptr; /* -> next more recently ref'd cache node */

    .
    .  (other necessary fields go here)
    .

  END Cache_Information_node_ty;

  /* In order to ensure appropriate cache performance for each    */
  /*   priority class, results dealing with cache usage must be   */
  /*   kept and periodically analyzed.                            */
  /* There must be variables of the following type for each       */
  /*   cached priority class (i.e., 1..HighPriorityNo).           */
  Prioritized_Cache_node_ptr = -> Prioritized_Cache_node_ty;
  Prioritized_Cache_node_ty = RECORD
    TotReads      : Integer;   /* count of Read I/Os to a priority */
                               /*    class                         */
    TotReadHits   : Integer;   /* count of Read Hits to a priority */
                               /*    class                         */
    PrevReads     : Integer;   /* value of TotReads last time      */
                               /*    checked                       */
    PrevReadHits  : Integer;   /* value of TotReadHits last time   */
                               /*    checked                       */
    RAReads       : Integer;   /* running average of # of Read     */
                               /*    I/Os                          */
    RAReadHits    : Integer;   /* running average of # of Read     */
                               /*    Hits                          */
    CacheSz       : Integer;   /* # of cache nodes currently       */
                               /*    assigned                      */
    OldCacheP     : Cache_ptr; /* -> to Trailer cache node         */
    YoungCacheP   : Cache_ptr; /* -> to Header cache node          */
  END Prioritized_Cache_node_ty;
```

DEFINITIONS FOR GLOBAL TYPES:
PASCAL-LIKE PSEUDO-CODE

Fig. 3

```
PROCEDURE Main;
  VAR /* Main */
    PresentTime : Time_of_Day_ty;
  BEGIN /* Main procedure */
    Initialize;
    REPEAT

      /* Handle the next I/O (if applicable) */
      IF "there is a Prioritized Cache I/O to issue" THEN
        BEGIN
          Issue_Prioritized_Cache_IO("I/O Priority number");
        END IF;

      /* Periodically tune the performance of the prioritized    */
      /*   cache.                                                 */
      PresentTime = "the Present Time";
      IF ((PresentTime - StartTime >= Inter_monitor_Time)
          AND ("Enough I/Os have occurred so as to provide a
              meaningful sample")) THEN
        BEGIN
          Prioritized_Caching_Tuning;
          StartTime = "the Present Time";
        END IF;

    UNTIL "Done";
  END Main;
```

MAIN PRIORITIZED CACHE DRIVER:
PASCAL-LIKE PSEUDO-CODE

## Fig. 5

PRIORITIZED
C A C H E

■■■■■■■■■■■■■■

PRIORITY CLASS #3 I/Os  ■■■■■■■■■■■■■■■■■■■■      LRU

-------------------

PRIORITY CLASS #2 I/Os  ■■■■■■■■■■■■■■■■■■■■      LRU

-------------------

PRIORITY CLASS #1 I/Os  ■■■■■■■■■■■■■■■■■■■■      LRU
                                                ■■■■■■■■■■■■■■

PRIORITY CLASS #0 I/Os  ■■■■■■■■■■■■■■■■■■■■■■■■■■■■■■■■■

ISSUING PRIORITIZED CACHE I/Os:
EACH PRIORITY CLASS UTILIZES
ITS OWN CACHE PARTITION

Fig. 6

PRIORITIZED
C A C H E

■■■■■■■■■■■■■■

PRIORITY CLASS #3 I/Os  ■■■■■■■■■■■■■■■■■■■■      LRU

-------------------

PRIORITY CLASS #2 I/Os  ■■■■■■■■■■■■■■■■■■■■■      LRU

-------------------

PRIORITY CLASS #1 I/Os  ■■■■■■■■■■■■■■■■■■■■      LRU

                                                ■■■■■■■■■■■■■

PRIORITY CLASS #0 I/Os  ■■■■■■■■■■■■■■■■■■■■■■■■■■■■■■■■■■■

CHANGE IN THE CACHE PARTITION SIZES

Fig. 7